# EUROPEAN PATENT APPLICATION

(11) **EP 4 456 190 A1**
(43) Date of publication of application: **30.10.2024**
(21) Application number: 22911769.2
(22) Date of filing: 15.12.2022
(51) Int. Cl.: H01M 4/38, C01B 33/02, H01M 10/052

(54) **NEGATIVE ACTIVE MATERIAL FOR RECHARGEABLE LITHIUM BATTERY, METHOD OF PREPARING SAME, AND RECHARGEABLE LITHIUM BATTERY INCLUDING SAME**

(30) Priority: 22.12.2021 KR 20210184601
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR)
(72) Inventor: PARK, Sangeun, Hanam-si, Gyeonggi-do 12907 (KR); PARK, Sun Jong, Pohang-si, Gyeongsangbuk-do 37655 (KR); KANG, Eun-Tae, Pohang-si, Gyeongsangbuk-do 37681 (KR); KIM, Yong Jung, Pohang-si, Gyeongsangbuk-do 37673 (KR); YOU, Seung Jae, Pohang-si, Gyeongsangbuk-do 37655 (KR); WOO, Jung Gyu, Pohang-si, Gyeongsangbuk-do 37671 (KR); CHO, Moonkyu, Pohang-si, Gyeongsangbuk-do 37671 (KR)
(74) Representative: Pfenning, Meinig & Partner mbB
(86) International application number: PCT/KR2022/020406
(87) International publication number: WO 2023/121136

(57) **Abstract**

The present exemplary embodiments relate to a silicon-based negative electrode active material, a method of preparing the same, and a lithium secondary battery including the same. The silicon-based negative electrode active material according to an exemplary embodiment may have a particle size fraction D1 of 1 µm or more, a D99 of 20 µm or less, and a degree of oxidation of 0.3% to 3.0%.

## Description

### [Technical Field]

The present exemplary embodiments relate to a negative electrode active material for a lithium secondary battery, a method of preparing the same, and a lithium secondary battery including the same.

### [Background Art]

Silicon has received a lot of attention as a negative electrode material for a secondary battery due to its significantly high theoretical capacity (Li₁₅Si₄: 3,600 mAh/g) and low operating voltage (> 0.1 V vs. Li/Li⁺). However, general Si-based negative electrode materials have the disadvantage of being difficult to apply to actual batteries due to a volume change of up to 300% during a cycle and low discharge capacity characteristics.

In order to solve these problems, recently, there have been attempts to solve these problems by using coarse silicon particles (several microns) and using less than the theoretical capacity.

However, in a process of pulverizing silicon particles, the finely pulverized particles easily aggregate or reattach to surfaces of large particles, and as a silicon particle size increases, a film reaction due to a side reaction with an electrolyte increases. As a result, the irreversible capacity increases, and the lifespan is significantly reduced.

Therefore, there is a need to develop a technique that may improve battery lifespan characteristics while using a silicon-based negative electrode material.

### [Disclosure]

### [Technical Problem]

The present disclosure has been made in an effort to provide a silicon-based negative electrode active material having excellent lifespan characteristics, a method of preparing the same, and a lithium secondary battery including the same.

### [Technical Solution]

An exemplary embodiment of the present disclosure provides a silicon-based negative electrode active material having a particle size fraction D1 of 1 µm or more, a D99 of 20 µm or less, and a degree of oxidation of 0.3% to 3.0%.

Another exemplary embodiment of the present disclosure provides a method of preparing a silicon-based negative electrode active material, the method including: preparing silicon particles and then pulverizing the silicon particles so that a D99 is 20 µm or less; classifying the particles whose D99 is controlled to be 20 µm or less to obtain particles having a D1 of 1 µm or more using a wet classification device; and preparing powder having a degree of oxidation of 0.3 to 3.0 by performing a heat treatment on the particles whose D99 is controlled to be 20 µm or less and D1 is controlled to be 1 µm or more.

Yet another exemplary embodiment of the present disclosure provides a lithium secondary battery including a negative electrode including the silicon-based negative electrode active material, a positive electrode, and an electrolyte.

### [Advantageous Effects]

According to an exemplary embodiment, lifespan deterioration due to volume expansion caused by the silicon particles during charging and discharging may be suppressed, and significantly excellent lifespan characteristics may be secured by reducing reactivity with the electrolyte because a SiO₂ layer is developed on the surface.

In addition, since hydrophilic properties are imparted to the silicon particle surface, dispersibility in an aqueous system may be improved and deterioration of the quality of an electrode plate when manufacturing an electrode may be prevented, and thus, excellent electrochemical performance may be obtained.

### [Description of the Drawings]

FIG. 1 is a schematic view of a device used in a method of preparing a silicon-based negative electrode active material according to an exemplary embodiment.
FIG. 2 illustrates images captured using a camera after manufacturing negative electrode plates using negative electrode active materials prepared according to Comparative Example 3 and Examples 1 and 5.

### [Mode for Invention]

The terms "first", "second", "third", and the like are used to describe various parts, components, regions, layers, and/or sections, but are not limited thereto. These terms are only used to differentiate a specific part, component, region, layer, or section from another part, component, region, layer, or section. Accordingly, a first part, component, region, layer, or section which will be described hereinafter may be referred to as a second part, component, region, layer, or section without departing from the scope of the present disclosure.

Terminologies used herein are to mention only a specific exemplary embodiment, and are not to limit the present disclosure. Singular forms used herein include plural forms as long as phrases do not clearly indicate an opposite meaning. The term "comprising" used in the specification concretely indicates specific properties, regions, integers, steps, operations, elements, and/or components, and is not to exclude the presence or addition of other specific properties, regions, integers, steps, operations, elements, and/or components.

When any part is positioned "on" or "above" another part, it means that the part may be directly on or above the other part or another part may be interposed therebetween. In contrast, when any part is positioned "directly on" another part, it means that there is no part interposed therebetween.

Unless defined otherwise, all terms including technical terms and scientific terms used herein have the same meanings as understood by those skilled in the art to which the present disclosure pertains. Terms defined in a generally used dictionary are additionally interpreted as having the meanings matched to the related technical document and the currently disclosed contents, and are not interpreted as ideal or very formal meanings unless otherwise defined.

### Silicon-based negative electrode active material

As described above, silicon-based negative electrode materials have the disadvantage of being difficult to apply actual batteries due to low discharge capacity characteristics.

These silicon-based negative electrode active materials have the problem of deteriorating battery lifespan due to volume expansion that occurs during charging and discharging. Therefore, in order to solve the above problems, the present exemplary embodiment provides a silicon-based negative electrode active material having a silicon particle size distribution and a degree of oxidation that may implement the most efficient lifespan characteristics when used by limiting a state of charge (SOC) to 20% or more and 80% or less using coarse silicon particles.

Specifically, an exemplary embodiment provides a silicon-based negative electrode active material having a particle size fraction D1 of 1 µm or more, a D99 of 20 µm or less, and a degree of oxidation of 0.3% to 3.0%.

In the present exemplary embodiment, the particle size fraction D1 of the silicon-based negative electrode active material may be 1 µm or more, and more specifically, 1 µm to 3 µm or 1.5 µm to 2.5 µm. In a case where the D1 of the silicon-based negative electrode active material satisfies the above range, when the SOC is limited to 20% or more and 80% or less, electrochemical lifespan characteristics may be effectively improved. Specifically, as described above, in a case where coarse silicon particles that do not include fine powder are used in an appropriate range, when charging and discharging the battery with a limited SOC, lifespan deterioration due to expansion of the silicon particles may be prevented. In addition, a lithium charge reaction is concentrated on a surface of the particle, and at this time, an inner core portion of the negative electrode active material particle is in a silicon state and the surface is in the form of LixSi. In the present exemplary embodiment, during the charge reaction, an unreacted inner core acts as a support for expansion and contraction, which improves lifespan characteristics, and the unreacted inner core reacts mainly on the surface only, which also improves output characteristics.

However, in a case of fine powder including silicon particles having a D1 size of less than 1 µm, the inside easily reacts with Li, and thus, it is difficult to obtain the above effect. Accordingly, the lifespan characteristics are significantly deteriorated. In addition, the fine powder including silicon particles having a D1 size of less than 1 µm acts as a domain that increases side reactions with the electrolyte, which also deteriorates the lifespan characteristics.

Such an effect is realized when a limited SOC is used.

In addition, the D99 of the silicon-based negative electrode active material may be 20 µm or less, and more specifically, 1 µm to 19 µm or 6 µm to 15 µm. In a case where the D99 of the silicon-based negative electrode active material satisfies the above range, when an electrode is manufactured using the silicon-based negative electrode active material of the present exemplary embodiment, since a local electrode pressing phenomenon may be prevented during a rolling process, quality of an electrode plate may be improved, and thus, a battery having excellent electrochemical performance may be implemented.

D99/D1 of the silicon-based negative electrode active material may be 1.0 to 12.0. When the D99/D1 value satisfies the above range, excellent lifespan characteristics may be obtained, and the electrode manufacturing process is easily performed. In addition, the electrochemical performance of the manufactured lithium secondary battery is excellent.

Next, a sphericity of the silicon-based negative electrode active material may be 0.9 or more, and more specifically, 0.90 to 0.98. When the sphericity satisfies the above range, lithium charging is uniformly controlled on the surface, and surface deterioration during the charging and discharging process may be suppressed.

Next, the degree of oxidation of the silicon-based negative electrode active material may be 0.3 wt% to 3.0 wt%, and more specifically, 0.32 wt% to 2.5 wt% or 0.34 wt% to 2.3 wt%.

In the present specification, the degree of oxidation means a content of oxygen in the total active material expressed in wt%. The degree of oxidation of the silicon-based negative electrode active material is measured using LECO ONH836 Series.

In the silicon-based negative electrode active material of the present exemplary embodiment, a certain amount of silicon particles is oxidized, such that a SiO₂ layer is developed on the surface. That is, the lifespan characteristics of the lithium secondary battery may be improved by controlling the degree of oxidation to an appropriate range together with the D1 particle size and D99 particle size.

In the present disclosure, when the D1 particle size and D99 particle size of the silicon-based negative electrode active material satisfy the above ranges and the degree of oxidation thereof also satisfies the above range, it has an advantageous effect in that the reversible expansion and contraction of the silicon-based negative electrode active material are easily performed, and at the same time, the quality of the electrode plate using the silicon-based negative electrode active material of the present exemplary embodiment is excellent. In addition, a lithium secondary battery to which the silicon-based negative electrode active material of the present exemplary embodiment is applied may secure excellent lifespan characteristics and electrochemical characteristics.

### Method of preparing silicon-based negative electrode active material

Hereinafter, a method of preparing a silicon-based negative electrode active material according to an exemplary embodiment will be described.

A method of preparing a silicon-based negative electrode active material according to another exemplary embodiment of the present disclosure may include: preparing silicon particles and then pulverizing the silicon particles so that a D99 is 20 µm or less; classifying the particles whose D99 is controlled to be 20 µm or less to obtain particles having a D1 of 1 µm or more using a wet classification device; and preparing powder having a degree of oxidation of 0.3 to 3.0 by performing a heat treatment on the particles whose D99 is controlled to be 20 µm or less and D1 is controlled to be 1 µm or more.

First, the preparing of the silicon particles and then the pulverizing of the silicon particles so that the D99 is 20 µm or less is performed.

The silicon particles may be, for example, coarse silicon particles.

In addition, the pulverizing of the silicon particles so that the D99 is 20 µm or less may be performed using at least one of a wet bead mill, an air jet mill, a pin mill, and a disk mill. When the silicon particles are pulverized using an air jet mill among the above methods, it has the advantage of improving the sphericity of the particle.

Next, the classifying of the particles whose D99 is controlled to be 20 µm or less to obtain the particles having the D1 of 1 µm or more using the wet classification device is performed.

The classifying of the particles to obtain the particles having the D1 of 1 µm or more may be performed using a tank, a stirrer, and an ultrasonic generator.

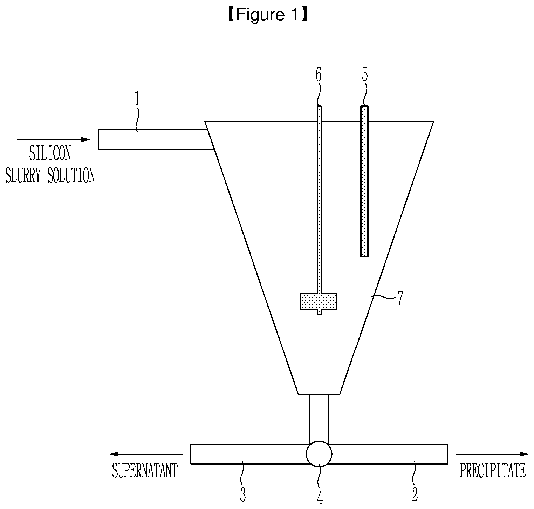

More specifically, the classifying of the particles to obtain the particles having the D1 of 1 µm or more may be performed, for example, using a device illustrated in FIG. 1.

Referring to FIG. 1, the method of preparing a silicon-based negative electrode active material includes: supplying the pulverized particles to a pipe 1 connected to a tank 7; dispersing the particles supplied through the pipe 1 using a stirrer 6 and an ultrasonic generator 5; precipitating the dispersed particles to obtain a precipitate and a supernatant; opening a valve connected to a bottom of the tank to discharge the precipitate through a pipe 2 located in one direction; discharging the supernatant through a pipe 3 located in an opposite direction to the pipe through which the precipitate is discharged; and drying the precipitate to obtain powder whose particle size D99 is controlled to be 20 µm or less and D1 is controlled to be 1 µm or more.

The dispersing of the particles using the stirrer and the ultrasonic generator may be performed by irradiating the particles with 20 kHz pulse ultrasonic waves with 300 W to 500 W for 30 minutes to 2 hours while stirring the particles at 200 to 300 RPM.

Next, in the preparing of the powder having the degree of oxidation of 0.3 to 3.0 by performing the heat treatment on the particles whose D99 is controlled to be 20 µm or less and D1 is controlled to be 1 µm or more, the heat treatment may be performed in an air atmosphere at a temperature of 300°C to 690°C for 1 hour to 2 hours. At this time, the heat treatment may be performed, for example, at a temperature of 300°C to 650°C.

Yet another exemplary embodiment of the present disclosure provides a lithium secondary battery including a negative electrode including the silicon-based negative electrode active material according to an exemplary embodiment of the present disclosure, a positive electrode, and an electrolyte located between the negative electrode and the positive electrode.

The negative electrode may be manufactured by mixing a negative electrode active material, a binder, and optionally a conductive material to prepare a composition for forming a negative electrode active material layer, and then applying the composition to a negative electrode current collector.

The negative electrode current collector may be, for example, a copper foil, a nickel foil, a stainless steel foil, a titanium foil, a nickel foam, a copper foam, a polymer substrate coated with a conductive metal, or a combination thereof.

Since the negative electrode active material is the same as in the above-described exemplary embodiment of the present disclosure, a description thereof will be omitted.

As the binder, polyvinyl alcohol, carboxymethyl cellulose/styrenebutadiene rubber, hydroxypropylene cellulose, diacetylene cellulose, polyvinyl chloride, polyvinylpyrrolidone, polytetrafluoroethylene, polyvinylidene fluoride, polyethylene, polypropylene, or the like may be used, but the binder is not limited thereto. The binder may be mixed in an amount of 1 wt% to 30 wt% with respect to the total weight of the composition for forming a negative electrode active material layer.

The conductive material is not particularly limited as long as it has conductivity without causing a chemical change in the battery. Specifically, as the conductive material, graphite such as natural graphite or artificial graphite; carbon black such as acetylene black, Ketjen black, channel black, furnace black, lamp black, or thermal black; a conductive fiber such as a carbon fiber or a metal fiber; metal powder such as carbon fluoride powder, aluminum powder, or nickel powder; conductive whisker such as zinc oxide or potassium titanate; a conductive metal oxide such as titanium oxide; or a polyphenylene derivative may be used. The conductive material may be mixed in an amount of 0.1 wt% to 30 wt% with respect to the total weight of the composition for forming a negative electrode active material layer.

Next, the positive electrode may be manufactured by mixing a positive electrode active material, a binder, and optionally a conductive material to prepare a composition for forming a positive electrode active material layer, and then applying the composition to a positive electrode current collector. In this case, the same binder and conductive material as those in the negative electrode are used.

As the positive electrode current collector, for example, stainless steel, aluminum, nickel, titanium, fired carbon, aluminum, or stainless steel having a surface treated with carbon, nickel, titanium, silver, or the like may be used.

As the positive electrode active material, a compound capable of reversible intercalation and deintercalation of lithium (lithiated intercalation compound) may be used.

As the positive electrode active material, specifically, one or more of composite oxides of a metal such as cobalt, manganese, nickel, or a combination thereof, and lithium may be used, and as a specific example, a compound represented by any one of the following chemical formulas may be used. Examples of the compound include LiₐA_{1-b}R_{b}D₂ (where 0.90 ≤ a ≤ 1.8 and 0 ≤ b ≤ 0.5); LiₐE_{1-b}R_{b}O_{2-c}D_{c} (where 0.90 ≤ a ≤ 1.8, 0 ≤ b ≤ 0.5, and 0 ≤ c ≤ 0.05); LiE_{2-b}R_{b}O_{4-c}D_{c} (where 0 ≤ b ≤ 0.5 and 0 ≤ c ≤ 0.05); LiₐNi_{1-b-c}Co_{b}R_{c}D_{α} (where 0.90 ≤ a ≤ 1.8, 0 ≤ b ≤ 0.5, 0 ≤ c ≤ 0.05, and 0 < α ≤ 2); LiₐNi_{1-b-c}Co_{b}R_{c}O_{2-α}Z_{α} (where 0.90 ≤ a ≤ 1.8, 0 ≤ b ≤ 0.5, 0 ≤ c ≤ 0.05, and 0 < α < 2); LiₐNi_{1-b-c}Co_{b}R_{c}O_{2-α}Z₂ (where 0.90 ≤ a ≤ 1.8, 0 ≤ b ≤ 0.5, 0 ≤ c ≤ 0.05, and 0 < α < 2); LiₐNi_{1-b-c}Mn_{b}R_{c}D_{α} (where 0.90 ≤ a ≤ 1.8, 0 ≤ b ≤ 0.5, 0 ≤ c ≤ 0.05, and 0 < α ≤ 2); LiₐNi_{1-b-c}Mn_{b}R_{c}O₂-_{α}Z_{α} (where 0.90 ≤ a ≤ 1.8, 0 ≤ b ≤ 0.5, 0 ≤ c ≤ 0.05, and 0 < α < 2); LiₐNi_{1-b-c}Mn_{b}R_{c}O_{2-α}Z₂ (where 0.90 ≤ a ≤ 1.8, 0 ≤ b ≤ 0.5, 0 ≤ c ≤ 0.05, and 0 < α < 2); LiₐNi_{b}E_{c}G_{d}O₂ (where 0.90 ≤ a ≤ 1.8, 0 ≤ b ≤ 0.9, 0 ≤ c ≤ 0.5, and 0.001 ≤ d ≤ 0.1.); LiₐNi_{b}Co_{c}Mn_{d}GeO₂ (where 0.90 ≤ a ≤ 1.8, 0 ≤ b ≤ 0.9, 0 ≤ c ≤ 0.5, 0 ≤ d ≤ 0.5, and 0.001 ≤ e ≤ 0.1.); LiₐNiG_{b}O₂ (where 0.90 ≤ a ≤ 1.8 and 0.001 ≤ b ≤ 0.1.); LiₐCoG_{b}O₂ (where 0.90 ≤ a ≤ 1.8 and 0.001 ≤ b ≤ 0.1.); LiₐMnG_{b}O₂ (where 0.90 ≤ a ≤ 1.8 and 0.001 ≤ b ≤ 0.1.); LiₐMn₂G_{b}O₄ (where 0.90 ≤ a ≤ 1.8 and 0.001 ≤ b ≤ 0.1.); QO₂; QS₂; LiQS₂; V₂O₅; UV₂O₅; LiTO₂; LiNiVO₄; Li_{(3-f)}J₂(PO₄)₃ (0 ≤ f ≤ 2); Li_{(3-f)}Fe₂(PO₄)₃(0 ≤ f ≤ 2); and LiFePO₄.

In the chemical formulas, A may be Ni, Co, Mn, or a combination thereof; R may be Al, Ni, Co, Mn, Cr, Fe, Mg, Sr, V, a rare earth element, or a combination thereof; D may be O, F, S, P, or a combination thereof; E may be Co, Mn, or a combination thereof; Z may be F, S, P, or a combination thereof; G may be Al, Cr, Mn, Fe, Mg, La, Ce, Sr, V, or a combination thereof; Q may be Ti, Mo, Mn, or a combination thereof; T may be Cr, V, Fe, Sc, Y, or a combination thereof; and J may be V, Cr, Mn, Co, Ni, Cu, or a combination thereof.

The electrolyte contains a non-aqueous organic solvent and a lithium salt.

The non-aqueous organic solvent serves as a medium through which ions involved in the electrochemical reaction of the battery may move.

The lithium salt is dissolved in the organic solvent, acts as a supply source of the lithium ions in the battery to allow a basic operation of the lithium secondary battery, and serves to promote movement of the lithium ions between the positive electrode and the negative electrode.

Depending on the type of lithium secondary battery, a separator may exist between the positive electrode and the negative electrode. As the separator, a polyethylene, polypropylene, or polyvinylidene fluoride layer or a multilayer film of two or more layers thereof may be used, and a mixed multilayer film such as a polyethylene/polypropylene double-layered separator, a polyethylene/polypropylene/polyethylene triple-layered separator, or a polypropylene/polyethylene/polypropylene triple-layered separator may also be used.

The lithium secondary battery may be classified into a lithium ion battery, a lithium ion polymer battery, and a lithium polymer battery depending on the types of separator and electrolyte used, may be classified into cylindrical, prismatic, coin, and pouch types depending on the shape thereof, and may be classified into a bulk type and a thin film type depending on the size thereof. The structures and manufacturing methods of these batteries are widely known in the art, and detailed descriptions will be omitted.

### [Description of the Drawings]

Hereinafter, exemplary embodiments of the present disclosure will be described in detail. However, these exemplary embodiments are provided as examples, and the present disclosure is not limited by these exemplary embodiments and is defined by only the scope of the claims to be described below.

### Example 1

A Si raw material having a particle size of 100 µm or less was subjected to air flow pulverization using an air jet mill so that a D99 was 10 µm or less. The pulverized Si powder was mixed with ethanol at a weight ratio of 10% to prepare a slurry.

The pulverized slurry as described above was transferred to a tank of a wet classification device and irradiated with ultrasonic waves with a 20 kHz pulse at 300 W for 30 minutes while stirring the pulverized slurry at 1,000 RPM.

Thereafter, the stirring and irradiation with ultrasonic waves were stopped, the slurry was left for 1 hour to allow heavy particles to be precipitated, and after leaving, 10 vol% of the input amount was recovered through the bottom. The recovered precipitate was transferred back to the tank and the same operation was repeated twice to obtain a silicon-based negative electrode active material having the particle sizes D1, D10, D50, D90, and D99 shown in Table 1.

### Example 2

A silicon-based negative electrode active material was prepared in the same manner as that of Example 1, except that the wet classification was performed once.

### Example 3

A negative electrode active material was prepared in the same manner as that of Example 1, except that the air flow pulverization was performed so that an average particle size D99 was 20 µm.

### Comparative Example 1

Silicon particles pulverized to have a D99 of 10 µm or less were used as a negative electrode active material without wet classification.

### Comparative Example 2

Silicon particles pulverized to have an average D99 of 20 µm or less were used as a negative electrode active material without wet classification.

### Comparative Example 3

A Si raw material having a particle size of 100 µm or less was used as a negative electrode active material without any pretreatment.

### Example 4

The silicon-based negative electrode active material obtained in Example 1 was subjected to a heat treatment in an air atmosphere at 300°C for 1 hour.

### Example 5

The silicon-based negative electrode active material obtained in Example 1 was subjected to a heat treatment in an air atmosphere at 400°C for 1 hour.

### Example 6

The silicon-based negative electrode active material obtained in Example 1 was subjected to a heat treatment in an air atmosphere at 500°C for 1 hour.

### Example 7

The silicon-based negative electrode active material obtained in Example 1 was subjected to a heat treatment in an air atmosphere at 600°C for 1 hour.

### Comparative Example 4

The silicon-based negative electrode active material obtained in Example 1 was subjected to a heat treatment in an air atmosphere at 700°C for 1 hour.

### Experimental Example 1 - Evaluation of characteristics of negative electrode active material

### (1) Manufacturing of coin-type full-cell battery

A CR2032 coin cell was manufactured using the silicon-based negative electrode active material prepared as described above, and then electrochemical evaluation was performed.

Specifically, 1.2 g of a polyacrylic acid (PAA) binder was mixed with 11 g of de-ionized water and stirred with a thinky mixer for 10 minutes. Then, 2.4 g of the negative electrode active material and 0.4 g of a super-P conductive material were weighed and mixed, and then the mixture was further stirred for 10 minutes.

Next, the slurry was coated onto a Cu current collector, dried, and rolled to manufacture a negative electrode plate. The loading amount of the negative electrode was about 3 mg/cm², and the electrode density of the negative electrode was 1.2 to 1.3 g/cc.

A positive electrode used as a counter electrode was manufactured by adding 0.15 g of super-C65 and 1.67 g of a PVdF binder, stirring the mixture with a thinky mixer for 3 minutes, adding 9.65 g of NCM and 1.5 g of NMP as positive electrode active materials, and then further mixing the mixture for 3 minutes.

Next, the slurry was coated onto an AI current collector, dried, and rolled to manufacture a positive electrode plate. The loading amount of the positive electrode was about 18 mg/cm², and the electrode density of the positive electrode was 3.5 to 3.6 g/cc.

A 2032 coin-type full-cell battery was manufactured by a conventional method using the negative electrode, positive electrode, and electrolyte, and a polypropylene separator. The electrolyte was prepared by dissolving 1 M LiPF₆ in a mixed solvent of ethylene carbonate (EC) and ethylmethyl carbonate (EMC) (mixing ratio EC:EMC = 3:7 vol%) to prepare a mixed solution, and then adding 1.5 wt% of vinylene carbonate (VC) and 10 wt% of FEC to the mixed solution.

### (2) Evaluation of lifespan characteristics

The coin-type half-cell prepared in (1) above was aged at room temperature (25°C) for 10 hours, and then lifespan characteristics were evaluated.

The capacity was evaluated based on 2,500 mAh/g. A charge and discharge test was conducted in an operating voltage range of 4.25 V to 2.5 V, and a current during charging and discharging was measured at 0.1 C in the initial cycle. Based on the first 1 C capacity, a current of 0.5 C was applied during charging and discharging to measure the lifespan for 100 cycles. At this time, a charge cut-off current was set to 0.005 C.

When evaluated under the above conditions, the negative electrode was charged and discharged at an SOC of about 40%.

**[Table 1]**

| | Particle size (unit: µm) | | | | | Lifespan (100 cy) (unit: %) | Degree of oxidation (%) |
|---|---|---|---|---|---|---|---|
| | D1 | D10 | D50 | D90 | D99 | | |
| Example 1 | 2.3 | 2.9 | 4.9 | 6.8 | 8.1 | 87 | 0.34 |
| Example 2 | 1.7 | 2.6 | 4.6 | 6.9 | 8.5 | 85.2 | 0.36 |
| Example 3 | 2.3 | 3.5 | 6.4 | 14.4 | 20.9 | 86.1 | 0.29 |
| Comparative Example 1 | 0.4 | 0.7 | 2.3 | 6.4 | 9.7 | 81.6 | 0.44 |
| Comparative Example 2 | 0.7 | 1.2 | 3.3 | 17.7 | 22.5 | 81.5 | 0.35 |
| Comparative Example 3 | 1.2 | 3.1 | 9.7 | 31.4 | 108.3 | 77.8 | 0.21 |
| Example 4 | 2.3 | 2.9 | 4.9 | 6.8 | 8.1 | 88.3 | 0.36 |
| Example 5 | 2.3 | 2.9 | 4.9 | 6.8 | 8.1 | 89.5 | 0.47 |
| Example 6 | 2.3 | 2.9 | 4.9 | 6.8 | 8.1 | 89 | 1.48 |
| Example 7 | 2.3 | 2.9 | 4.9 | 6.8 | 8.1 | 87.4 | 2.1 |
| Comparative Example 4 | 2.3 | 2.9 | 4.9 | 6.8 | 8.1 | 64.7 | 3.4 |

Referring to Table 1, the lifespan characteristics of Comparative Example 3 in which the silicon raw material was used without pretreatment were the poorest. In addition, when the maximum particle size was reduced through wet pulverization as in Comparative Examples 2 and 3, the lifespan characteristics were somewhat improved, but even when the D99 particle size was reduced to about 10 µm as in Comparative Example 1, the effect was not significant. Accordingly, it was confirmed that when wet ultrasonic classification was performed to reduce fine particles of less than 1 µm, the lifespan characteristics were effectively improved as in Examples 1 and 2.

It was confirmed that the lifespan was further improved when the powder obtained in Example 1 was oxidized through the heat treatment as in Examples 4 and 5.

However, when the heat treatment temperature was increased by 700°C as in Comparative Example 4, it was confirmed that the degree of oxidation excessively increased and the lifespan characteristics were even deteriorated.

### Experimental Example 2 - Evaluation of electrode quality

Negative electrode plates were manufactured in the same manner as described in (1) of Experimental Example 1 using the negative electrode active materials prepared according to Comparative Example 3 and Examples 1 and 5.

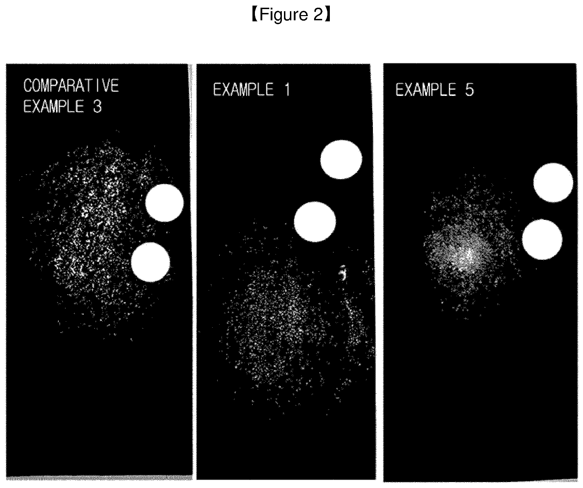

Next, the surfaces of the negative electrode plates manufactured described above were imaged using a camera and then observed with the naked eye. The images are illustrated in FIG. 2.

Referring to FIG. 2, in the case of the negative electrode plate manufactured using the negative electrode active material of Comparative Example 3 in which the raw material was used without pretreatment, after rolling, the local pressing phenomenon was most frequently observed.

On the other hand, when the particle size D99 was reduced to 10 µm or less by pulverizing the coarse silicon particles as in Example 1, it was confirmed that the local pressing phenomenon during manufacturing of the negative electrode plate was significantly improved.

In addition, in the case of the negative electrode plate manufactured using the negative electrode active material of Example 5 in which the surface of the negative electrode active material was oxidized, it was confirmed that the electrode quality was further improved because the dispersion of the negative electrode active material in the electrode was improved due to improvement of the affinity for the binder.

The present disclosure is not limited to the exemplary embodiments, but may be prepared in various different forms, and it will be apparent to those skilled in the art to which the present disclosure pertains that the exemplary embodiments may be implemented in other specific forms without departing from the spirit or essential feature of the present disclosure. Therefore, it is to be understood that the exemplary embodiments described hereinabove are illustrative rather than restrictive in all aspects.

## Claims

1. A silicon-based negative electrode active material having a particle size fraction D1 of 1 µm or more, a D99 of 20 µm or less, and a degree of oxidation of 0.3% to 3.0%.

2. The silicon-based negative electrode active material of claim 1, wherein:
a sphericity of the silicon-based negative electrode active material is 0.9 or more.

3. The silicon-based negative electrode active material of claim 1, wherein:
D99/D1 of the silicon-based negative electrode active material is 1.0 to 12.0.

4. The silicon-based negative electrode active material of claim 1, wherein:
the degree of oxidation is 0.32% to 2.5%.

5. A method of preparing a silicon-based negative electrode active material, the method comprising:
preparing silicon particles and then pulverizing the silicon particles so that a D99 is 20 µm or less;
classifying the particles whose D99 is controlled to be 20 µm or less to obtain particles having a D1 of 1 µm or more using a wet classification device; and
preparing powder having a degree of oxidation of 0.3 to 3.0 by performing a heat treatment on the particles whose D99 is controlled to be 20 µm or less and D1 is controlled to be 1 µm or more.

6. The method of claim 5, wherein:
the pulverizing of the silicon particles so that the D99 is 20 µm or less is performed using at least one of a wet bead mill, an air jet mill, a pin mill, and a disk mill.

7. The method of claim 5, wherein:
the classifying of the particles to obtain the particles having the D1 of 1 µm or more is performed using a tank, a stirrer, and an ultrasonic generator.

8. The method of claim 7, wherein:
the classifying of the particles to obtain the particles having the D1 of 1 µm or more includes:
supplying the pulverized particles to a pipe connected to the tank;
dispersing the particles supplied through the pipe using the stirrer and the ultrasonic generator;
precipitating the dispersed particles to obtain a precipitate and a supernatant;
opening a valve connected to a bottom of the tank to discharge a precipitate through a pipe located in one direction;
discharging the supernatant through a pipe located in an opposite direction to the pipe through which the precipitate is discharged; and
drying the precipitate to obtain powder whose particle size D99 is controlled to be 20 µm or less and D1 is controlled to be 1 µm or more.

9. The method of claim 8, wherein:
the dispersing of the particles using the stirrer and the ultrasonic generator is performed while stirring the particles at 200 RPM to 300 RPM.

10. The method of claim 8, wherein:
the dispersing of the particles using the stirrer and the ultrasonic generator is performed by irradiating the particles with 20 kHz pulse ultrasonic waves with 300 W to 500 W for 30 minutes to 2 hours.

11. The method of claim 5, wherein:
in the preparing of the powder having the degree of oxidation of 0.3 to 3.0 by performing the heat treatment on the particles whose D99 is controlled to be 20 µm or less and D1 is controlled to be 1 µm or more,
the heat treatment is performed in an air atmosphere at a temperature of 300°C to 690°C for 1 hour to 2 hours.

12. A lithium secondary battery comprising:
a negative electrode including the silicon-based negative electrode active material of claim 1;
a positive electrode; and
an electrolyte.
